(19) **Europäisches Patentamt / European Patent Office / Office européen des brevets**

(11) **EP 1 388 805 B1**

(12) **EUROPEAN PATENT SPECIFICATION**

(45) Date of publication and mention
of the grant of the patent:
**17.12.2008 Bulletin 2008/51**

(51) Int Cl.:
*G06K 9/00* (2006.01)  *G06K 9/62* (2006.01)

(21) Application number: **03254659.0**

(22) Date of filing: **15.07.2003**

(54) **Apparatus and method for retrieving face images using combined components descriptors**

Gerät und Verfahren zum Wiederauffinden von Gesichtsbildern mit Verwendung kombinierter Komponentendeskriptoren

Appareil et procédé de récupérage d'images de visage utilisant des descripteurs de composants combinés

(84) Designated Contracting States:
**DE FR GB**

(30) Priority: **15.07.2002 KR 2002041406**
**31.12.2002 KR 2002087920**

(43) Date of publication of application:
**11.02.2004 Bulletin 2004/07**

(73) Proprietor: **SAMSUNG ELECTRONICS CO., LTD.**
**Suwon-City, Kyungki-do (KR)**

(72) Inventors:
- **Kim, Taekyun**
  **Yongin-city,**
  **Kyungki-do (KR)**
- **Kim, Sangryong**
  **Yongin-city, Kyungki-do (KR)**
- **Kee, Seokcheol**
  **Yongin-city,**
  **Kyungki-do (KR)**
- **Hwang, Wonjun**
  **Seoul (KR)**
- **Kim, Hyunwoo**
  **Samsung Advanced Inst. of Tech.**
  **Yongin-city,**
  **Kyungki-do (KR)**

(74) Representative: **Greene, Simon Kenneth**
**Elkington and Fife LLP**
**Prospect House**
**8 Pembroke Road**
**Sevenoaks,**
**Kent TN13 1XR (GB)**

(56) References cited:
- ZHAO L ET AL: "Mosaic image method: a local and global method" PATTERN RECOGNITION, ELSEVIER, KIDLINGTON, GB, vol. 32, no. 8, August 1999 (1999-08), pages 1421-1433, XP004169488 ISSN: 0031-3203
- V. FRANC, J. MATAS: "An Extension of the Component-based LDA Descriptor by the Generalised Discriminant Analysis M8727" ISO IEC JTC1 SC29 WG11 MPEG2002, 22 July 2002 (2002-07-22), - 26 July 2002 (2002-07-26) pages 1-5, XP002314056
- BELHUMEUR P N ET AL: "EIGENFACES VS. FISHERFACES: RECOGNITION USING CLASS SPECIFIC LINEAR PROJECTION" IEEE TRANSACTIONS ON PATTERN ANALYSIS AND MACHINE INTELLIGENCE, IEEE INC. NEW YORK, US, vol. 19, no. 7, July 1997 (1997-07), pages 711-720, XP000698170 ISSN: 0162-8828
- POTAMIANOS G ET AL: "Improved ROI and within frame discriminant features for lipreading" PROCEEDINGS 2001 INTERNATIONAL CONFERENCE ON IMAGE PROCESSING. ICIP 2001. THESSALONIKI, GREECE, OCT. 7 - 10, 2001, INTERNATIONAL CONFERENCE ON IMAGE PROCESSING, NEW YORK, NY : IEEE, US, vol. VOL. 1 OF 3. CONF. 8, 7 October 2001 (2001-10-07), pages 250-253, XP010563330 ISBN: 0-7803-6725-1
- BAUDAT G ET AL: "Generalized discriminant analysis using a kernel approach" NEURAL COMPUTATION, MASSACHUSETTS INSTITUTE OF TECHNOLOGY, US, vol. 12, no. 10, October 2000 (2000-10), pages 2385-2404, XP002172299 ISSN: 0899-7667

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- KOUZANI A Z ET AL: "Multiresolution eigenface-components" TENCON '97. IEEE REGION 10 ANNUAL CONFERENCE. SPEECH AND IMAGE TECHNOLOGIES FOR COMPUTING AND TELECOMMUNICATIONS., PROCEEDINGS OF IEEE BRISBANE, QLD., AUSTRALIA 2-4 DEC. 1997, NEW YORK, NY, USA,IEEE, US, 2 December 1997 (1997-12-02), pages 353-356, XP010264172 ISBN: 0-7803-4365-4
- SHAKUNAGA T ET AL: "Decomposed eigenface for face recognition under various lighting conditions" PROCEEDINGS 2001 IEEE CONFERENCE ON COMPUTER VISION AND PATTERN RECOGNITION. CVPR 2001. KAUAI, HAWAII, DEC. 8 - 14, 2001, PROCEEDINGS OF THE IEEE COMPUTER CONFERENCE ON COMPUTER VISION AND PATTERN RECOGNITION, LOS ALAMITOS, CA, IEEE COMP. SOC, US, vol. VOL. 1 OF 2, 8 December 2001 (2001-12-08), pages 864-871, XP010583836 ISBN: 0-7695-1272-0
- CAGNONI S ET AL: "A modified modular eigenspace approach to face recognition" IMAGE ANALYSIS AND PROCESSING, 1999. PROCEEDINGS. INTERNATIONAL CONFERENCE ON VENICE, ITALY 27-29 SEPT. 1999, LOS ALAMITOS, CA, USA,IEEE COMPUT. SOC, US, 27 September 1999 (1999-09-27), pages 490-495, XP010354175 ISBN: 0-7695-0040-4
- PENTLAND A ET AL: "VIEW-BASED AND MODULAR EIGENSPACES FOR FACE RECOGNITION" PROCEEDINGS OF THE COMPUTER SOCIETY CONFERENCE ON COMPUTER VISION AND PATTERN RECOGNITION. SEATTLE, JUNE 21 - 23, 1994, LOS ALAMITOS, IEEE COMP. SOC. PRESS, US, 21 June 1994 (1994-06-21), pages 84-91, XP000515825 ISBN: 0-8186-5827-4
- TAE-KYUN KIM ET AL: "Face description based on decomposition and combining of a facial space with LDA" INT. CONF. IMAGE PROCESSING, vol. 3, 14 September 2003 (2003-09-14), pages 877-880, XP010669974
- JIAN HUANG ET AL: "Component-based LDA method for face recognition with one training sample" IEEE INT. WORKSHOP ANALYSIS AND MODELLING OF FACES AND GESTURES, 2003, pages 120-126, XP010664354
- QIONG YANG ET AL: "Discriminant local feature analysis of facial images" PROC. INT. CONF. ON IMAGE PROCESSING, vol. 2, 14 September 2003 (2003-09-14), pages 863-866, XP010670594
- GOTTUMUKKAL R ET AL: "An improved face recognition technique based on modular PCA approach" PATTERN RECOGNITION LETTERS, NORTH-HOLLAND PUBL. AMSTERDAM, NL, vol. 25, no. 4, March 2004 (2004-03), pages 429-436, XP004487933 ISSN: 0167-8655

**Description**

BACKGROUND

1. Field of the Invention

The present invention relates generally to an apparatus and method for retrieving face images, using combined component descriptors.

2. Description of the Related Art

Generally, in face image retrieval technologies, a face image input by a user (hereinafter referred to as "queried face image") is compared with face images stored in a face image database (DB) (hereinafter referred to as "trained face images") to thereby retrieve from the DB a trained face image identical with or the most similar to the queried face image as inputted.

In order to obtain a retrieval result as accurate as possible when retrieving a stored face image the most similar to the queried face image, among stored face images, face images of each person must be databased by means of features that can represent the best identify of the person having the face images, irregardless of illumination, posture of or facial expression of the person. Considering that the database would be of a large volume, storing therein a large number of face images relative to a lot of persons, a method of determining the similarity in a simple manner is necessary.

In general, a face image is comprised of pixels. These pixels are presented in one column vector and the dimensionality of the vector is considerably large. For this reason, various researches have been carried out, to represent face images using a small amount of data while maintaining precision and to find out the most similar face image with a small number of calculations when retrieving a stored face image the most similar to the queried face images from a face image DB.

As those methods that can represent face images with a small amount of data and retrieve a face image with a small number of calculations while obtaining accurate retrieval results, there are currently PCA, LDA and the like. The PCA stands for "Principal Components Analysis," using an eigenface, and the LDA stands for "Linear Discriminant Analysis" wherein the projection W (transformation matrix) to maximize between-class (person) scatters and to minimize within-class scatter (between-various images of a person) is determined, and represent a face image with a predetermined descriptor by use of the determined projection W.

Additionally, there is used a method of retrieving face images in such a way that an entire face image is divided into several facial components, e.g., eyes, a nose and a mouth, rather than being represented as it is, wherein feature vectors are extracted from the facial components and the extracted feature vectors are compared with each other with the weights of the components being taken into account.

A method of retrieving face images by applying the LDA method to divide facial components is described in Korean Patent Appln. 10-2002-0023255 entitled "Component-based Linear Discriminant Analysis (LDA) Facial Descriptor."

However, since those conventional methods compare all the feature vector data of respective components with one another, the amount of data that are compared with one another is considerably increased when training face images of high capacity are compared with one another, so the processing of data becomes inefficient and the processing time of data is lengthened. Additionally, those conventional methods do not sufficiently consider correlations between the facial components, and the precision of retrieval is insufficient.

SUMMARY

In a first aspect, the present invention provides an apparatus for retrieving face images using combined component descriptors, including an image division unit for dividing an input image into facial components, a LDA transformation unit for LDA transforming the facial components into component descriptors of the facial components, a vector synthesis unit for synthesizing the transformed component descriptors into a single vector, a Generalized Discriminant Analysis (GDA) transformation unit for GDA transforming the single vector into a single face descriptor, and a similarity determination unit for determining similarities between an input query face image and face images stored in an face image DB by comparing a face descriptor of the input query face image with face descriptors of the face images stored in the face image DB.

Preferably, the LDA transformation units comprises LDA transformation units for LDA transforming the facial components into component descriptors of the facial components, and vector normalization units for vector normalizing the transformed component descriptors into a one-dimensional vector, and the LDA transformation units and vector normalization units are each provided for the facial components.

Desirably, the image DB stores face descriptors of the face images, and the comparison of the input query face image with the face images of the image DB is performed by comparing the face descriptor of the input query face image with the face descriptors of the face images stored in the image DB, and the divided face components are partially overlapped with each other, and the face components into which the input face image is divided comprises eyes, a nose and a mouth.

The similarity determination unit extracts first similar face images similar to the input query face image and second similar face images similar to the first face images from the image DB, and determines similarities between the input query face image and the face images of the image DB using the similarities between the input query face image and the second similar face images. At this time, the determination of the similarities between the input query face image and the face images of the image DB is performed using the following equation

$$\text{Joint } S_{q,m} = S_{q,m} + \sum_{k=1}^{M} S_{q,h^{1st}_k} \cdot S_{h^{1st}_{k},m} + \sum_{k=1}^{M} S_{q,h^{1st}_k} \sum_{l=1}^{L} S_{h^{1st}_{k},h^{2nd}_l} \cdot S_{h^{2nd}_{l},m}$$

where $S_{q,m}$ denotes similarities between the input query face image q and the face images m of the image DB, $S_{q,h1}{}^{st}{}_k$ denotes similarities between the query face image q and the first similar face images, $S_{h1}{}^{st}{}_{k,m}$ denotes similarities between the first similar face images and the face images m of the image DB, $S_{h1}{}^{st}{}_{k,h2}{}^{nd}{}_l$ denotes similarities between the first similar face images and the second similar face images, $S_{h2}{}^{nd}{}_{l,m}$ denotes similarities between the second similar face images and the face images m of the image DB, M denotes a number of the first similar face images, and L denotes a number of the second similar face images with respect to each of the second similar face images.

More preferably, the apparatus according to the present invention further comprises a transformation matrix/transformation coefficient DB for storing a transformation matrix or transformation coefficients calculated by training the face images stored in the image DB, wherein the LDA transformation unit or the GDA transformation unit performs LDA transformation or GDA transformation using the stored transformation matrix or transformation coefficients.

According to another aspect of the present invention, an apparatus for retrieving face images using combined component descriptors comprises an image division unit for dividing an input image into facial components, a first Linear Discriminant Analysis (LDA) transformation unit for LDA transforming the facial components into component descriptors of the facial components, a vector synthesis unit for synthesizing the transformed component descriptors into a single vector, a second LDA transformation unit for LDA transforming the single vector into a single face descriptor, and a similarity determination unit for determining similarities between an input query face image and face images stored in an face image database (DB) by comparing a face descriptor of the input query face image with face descriptors of the face images stored in the face image DB.

Preferably, the first LDA transformation unit comprises LDA transformation units for LDA transforming the facial components into component descriptors of the facial components, and vector normalization units for vector normalizing the transformed component descriptors into a one-dimensional vector, and the LDA transformation units and vector normalization units are each provided for the divided facial components.

Preferably, the image DB stores face descriptors of the face images, and the comparison of the input query face image with the face images of the image DB is performed by comparing the face descriptor of the input query face image with the face descriptors of the face images stored in the image DB, the divided face components are partially overlapped with each other, and the face components into which the input face image is divided comprises eyes, a nose and a mouth.

The similarity determination unit extracts first similar face images similar to the input query face image and second similar face images similar to the first face images from the image DB, and determines similarities between the input query face image and the face images of the image DB using the similarities between the input query face image and the second similar face images. At this time, the determination of the similarities between the input query face image and the face images of the image DB is performed using the following equation

$$\text{Joint } S_{q,m} = S_{q,m} + \sum_{k=1}^{M} S_{q,h^{1st}_k} \cdot S_{h^{1st}_{k},m} + \sum_{k=1}^{M} S_{q,h^{1st}_k} \sum_{l=1}^{L} S_{h^{1st}_{k},h^{2nd}_l} \cdot S_{h^{2nd}_{l},m}$$

where $S_{q,m}$ denotes similarities between the input query face image q and the face images m of the image DB, $S_{q,h1}{}^{st}{}_k$ denotes similarities between the query face image q and the first similar face images, $S_{h1}{}^{st}{}_{k,m}$ denotes similarities between the first similar face images and the face images m of the image DB, $S_{h1}{}^{st}{}_{k,h2}{}^{nd}{}_l$ denotes similarities between the first similar face images and the second similar face images, $S_{h2}{}^{nd}{}_{l,m}$ denotes similarities between the second similar face images and the face images m of the image DB, M denotes a number of the first similar face images, and L denotes a number of the second similar face images with respect to each of the second similar face images.

More preferably, the apparatus according to the present invention further comprises a transformation matrix/ transformation coefficient DB for storing a transformation matrix or transformation coefficients calculated by training the face images stored in the image DB, wherein the first LDA transformation unit or the second LDA transformation unit performs LDA transformation using the stored transformation matrix or transformation coefficients.

In order to accomplish the above object, the present invention provides a method of retrieving face images using combined component descriptors, including the steps of dividing an input image into facial components, LDA transforming the divided facial components into component descriptors of the facial components, synthesizing the transformed component descriptors into a single vector, GDA transforming the single vector into a single face descriptor, and determining similarities between an input query face image and face images stored in an face image DB by comparing a face descriptor of the input query face image with face descriptors of the face images stored in the face image DB. The step of LDA transforming the divided facial components comprises the steps of LDA transforming the divided facial components into component descriptors of the facial components, and vector normalizing the transformed component descriptors into a one-dimensional vector, wherein the LDA transforming or the GDA transforming is carried out using a transformation matrix or a transformation coefficient calculated by training the face images stored in the image DB.

The comparing of the input query face image with the face images of the image DB is performed by comparing the face descriptor of the input query face image with the face descriptors of the face images stored in the image DB, and the divided face components are partially overlapped with each other. The face components into which the input face image is divided comprises eyes, a nose and a mouth.

The step of determining similarities comprises the steps of extracting first similar face images similar to the input query face image and second similar face images similar to the first face images from the image DB, and determining similarities between the input query face image and the face images of the image DB using the similarities between the input query face image and the second similar face images. At this time, the step of extracting the first and second similar face images comprises the first similarity determination step of determining similarities between the input query face image and the face images of the image DB, the first similar face image extraction step of extracting the first similar face images in an order of similarities according to results of the first similarity determination step, the second similarity determination step of determining similarities between the first similar face images and the face images of the image DB, and the second similar face image extraction step of extracting the second similar face images for each of the first similar face images in an order of similarities according to results of the second similarity determination step. The determining of similarities between the input query face image and the face images of the image DB is performed using the following equation

$$\text{Joint } S_{q,m} = S_{q,m} + \sum_{k=1}^{M} S_{q,h1^{st}_k} \cdot S_{h1^{st}_{k,m}} + \sum_{k=1}^{M} S_{q,h1^{st}_k} \sum_{l=1}^{L} S_{h1^{st}_k,h2^{nd}_l} \cdot S_{h2^{nd}_{l,m}}$$

where $S_{q,m}$ denotes similarities between the input query face image q and the face images m of the image DB, $S_{q,h1}{}^{st}{}_{k}$ denotes similarities between the query face image q and the first similar face images, $S_{h1}{}^{st}{}_{k,m}$ denotes similarities between the first similar face images and the face images m of the image DB, $S_{h1}{}^{st}{}_{k,h2}{}^{nd}{}_{l}$ denotes similarities between the first similar face images and the second similar face images, $S_{h2}{}^{nd}{}_{l,m}$ denotes similarities between the second similar face images and the face images m of the image DB, M denotes a number of the first similar face images, and L denotes a number of the second similar face images with respect to each of the second similar face images.

Desirably, the method according to the present invention further comprises the step of outputting the face images of the image DB retrieved based on the determined similarities

In addition, the present invention provides a method of retrieving face images using combined component descriptors, including the steps of dividing an input image into facial components, LDA transforming the facial components into component descriptors of the facial components, synthesizing the transformed component descriptors into a single vector, LDA transforming the single vector into a single face descriptor, and determining similarities between an input query face image and face images stored in an face image DB by comparing a face descriptor of the input query face image with face descriptors of the face images stored in the face image DB.

Preferably, the step of LDA transforming the facial components comprises the steps of LDA transforming the facial components into component descriptors of the facial components, and vector normalizing the transformed component descriptors into a one-dimensional vector, and the LDA transforming is carried out using a transformation matrix or a transformation coefficient calculated by training the face images stored in the image DB.

The comparing of the input query face image with the face images of the image DB is performed by comparing the face descriptor of the input query face image with the face descriptors of the face images stored in the image DB.

The divided face components are partially overlapped with each other. The face components into which the input face image is divided comprises eyes, a nose and a mouth.

The step of determining similarities comprises the steps of extracting first similar face images similar to the input query face image and second similar face images similar to the first face images from the image DB, and determining similarities between the input query face image and the face images of the image DB using the similarities between the input query face image and the second similar face images. The step of extracting the first and second similar face images comprises the first similarity determination step of determining similarities between the input query face image and the face images of the image DB, the first similar face image extraction step of extracting the first similar face images in an order of similarities according to results of the first similarity determination step, the second similarity determination step of determining similarities between the first similar face images and the face images of the image DB, and the second similar face image extraction step of extracting the second similar face images for each of the first similar face images in an order of similarities according to results of the second similarity determination step. At this time, the determining of similarities between the input query face image and the face images of the image DB is performed using the following equation

$$\text{Joint } S_{q,m} = S_{q,m} + \sum_{k=1}^{M} S_{q,h^{1st}k} \cdot S_{h^{1st}k,m} + \sum_{k=1}^{M} S_{q,h^{1st}k} \sum_{l=1}^{L} S_{h^{1st}k,h^{2nd}l} \cdot S_{h^{2nd}l,m}$$

where $S_{q,m}$ denotes similarities between the input query face image q and the face images m of the image DB, $S_{q,h1}{}^{st}{}_{k}$ denotes similarities between the query face image q and the first similar face images, $S_{h1}{}^{st}{}_{k,m}$ denotes similarities between the first similar face images and the face images m of the image DB, $S_{h1}{}^{st}{}_{k,h2}{}^{nd}{}_{l}$ denotes similarities between the first similar face images and the second similar face images, $S_{h2}{}^{nd}{}_{l,m}$ denotes similarities between the second similar face images and the face images m of the image DB, M denotes a number of the first similar face images, and L denotes a number of the second similar face images with respect to each of the second similar face images.

More preferably, the method according to the present invention further comprises the step of outputting the face images of the image DB retrieved based on the determined similarities.

Accordingly, the present invention has been made keeping in mind the above problems occurring in the prior art. The present invention provides an apparatus and method for retrieving face images using combined component descriptors, which generates lower-dimensional face descriptors by combining component descriptors generated with respect to facial components and compares the lower-dimensional face descriptors with each other, thus enabling precise face image retrieval while reducing the amount of data and retrieval time required for face image retrieval.

The present invention also provides an apparatus and method for retrieving face images using combined component descriptors, which utilizes an input query face image and training face images similar to the input query face image as comparison references at the time of face retrieval, thus providing a relatively high face retrieval rate.

BRIEF DESCRIPTION OF THE DRAWINGS

The above and other objects, features and advantages of the present invention will be more clearly understood from the following detailed description taken in conjunction with the accompanying drawings, in which:

FIG. 1 is a diagram showing the construction of apparatus for retrieving face images according to an embodiment of the present invention;
FIG. 2 is a flowchart showing a method of retrieving face images according to an embodiment of the present invention;
FIG. 3 is a block diagram showing the face image retrieving method according to the embodiment of the present invention;
FIG. 4 is a flowchart showing a process of determining similarities according to an embodiment of the present invention;
FIGs. 5A and 5B is a view showing a process of dividing a face image according to an embodiment of the present invention; and
FIG. 6 is a table of experimental results obtained by carrying out experiments using a conventional face retrieval method and the face retrieval method of the present invention.

DESCRIPTION OF THE PREFERRED EMBODIMENTS

Reference now should be made to the drawings, in which the same reference numerals are used throughout the different drawings to designate the same or similar components.

First, the LDA method applied to the present invention is described below. The LDA method is disclosed in the paper of T. K. Kim, et al., "Component-based LDA Face Descriptor for Image Retrieval", British Machine Vision Conference (BMVC), Cardiff, UK, Sep. 2-5, 2002.

If a training method, such as the LDA method, is employed, the variations of illumination and poses can be eliminated during encoding. In particular, the LDA method can effectively process a face image recognition scenario in which two or more face images are registered, which is an example of identity training.

Meanwhile, the LDA method is the method that can effectively represent between-class disperse (disperse between classes (persons)) having different identities and, therefore, can distinguish the variation of face images caused by the variations of identities from the variations of face images caused by the variations of other factors, such as the variations of illumination and impressions. LDA is a class specific method in that it represents data to be useful to classification. This method can be accomplished by calculating a transformation that that maximizes between-class scatter while minimizing within-class scatter. Accordingly, when a person tries to recognize a face image under an illumination condition different from that at the time of registration, the variation of a face image results from the variations of illumination, it can be determined that the varied face image belongs to the same person. Here is the brief mathematical description of LDA.Given a set of N images $\{x_1, x_2, ..., x_N\}$ each belonging to one of class C $\{X_1, X_2, ..., X_c\}$, LDA selects a linear transformation matrix W so that the ratio of the between-class scatter to the within-class scatter is maximized.

The between-class scatter and the within-class scatter can be represented by the following equation 1.

$$S_B = \sum_{i=1}^{c} N_i (\mu_i - \mu)(\mu_i - \mu)^T$$

$$\text{(1)}$$

$$S_w = \sum_{i=1}^{c} \sum_{x \in X} (x_k - \mu_i)(x_k - \mu_i)^T$$

where $\mu$ denotes the mean of entire images, $\mu_1$ denotes the mean image of class $X_i$, and $N_i$ denotes the number of images in class $X_i$. If the within-class scatter matrix $S_w$ is not singular, LDA finds an orthonormal matrix $W_{opt}$ that maximizes the ratio of the determinant of the between-class scatter matrix to the determinant of the within-class scatter matrix. That is, the LDA projection matrix can be presented by

$$W_{opt} = \arg\max_{W} \frac{|W^T S_B W|}{|W^T S_w W|} = [\, w_1 \quad w_2 \quad \cdots \quad w_m \,]$$

$$\text{(2)}$$

The set of solution $\{w_i \mid i = 1, 2, ..., m\}$ is that of generalized eigenvectors of $S_B$ and $S_w$ corresponding to the m largest engenvalues $\{\lambda_i \mid i = 1, 2, ..., m\}$.

The LDA face descriptor is described below.

Under the present invention, in order to take advantages of both a desirable linear property and robustness to image variation of the component-based approach, LDA is combined with the component-based representation. The LDA method is applied to facial components respectively, by which the precision of retrieval is improved.

For a training data set, an LDA transformation matrix is extracted. Given a set of N training images $\{x_1, x_2, \cdots, x_N\}$, all the images are divided into L facial components by a facial component division algorithm. All patches of each component are gathered and are represented in vector form: the k-th component is denoted as $\{z_1^k, z_2^k, \cdots, z_N^k\}$. Then, for the set of each facial component, a LDA transformation matrix is trained. For the k-th facial component, the corresponding LDA matrix $W^k$ is computed. Finally, the set of LDA transformation matrices $\{W^1, W^2, \cdots, W^L\}$ is stored to be used for a training stage or retrieval stage.

For the training face images, L vectors $\{z^1, z^2, \cdots, z^L\}$ corresponding to facial component patches are extracted from a face image x. A set of LDA feature vectors $y = \{y^1, y^2, \cdots, y^L\}$ is extracted by transforming the component vectors by the corresponding LDA transformation matrices, respectively. The feature vectors are computed by $y^k = (W^k)^T z^k$, $k = 1, 2, \cdots, L$.

Consequently, for the component-based LDA method, a face image x is compactly represented by a set of LDA feature vectors, that is, component descriptors $\{y^1, y^2, \cdots, y^L\}$.

In conclusion, in order to apply the LDA method, LDA transformation matrices $W^k$ must be computed for the facial components, and later input query face images are LDA converted by the calculated LDA transformation *matrix* $W^k$ using $y^k = (W^k)^T z^k$.

Hereinafter, the Generalized Discriminant Analysis (GDA) method applied to the present invention is described. The GDA method is disclosed in the paper of BAUDAT G., et al., "Generalized Discriminant Analysis Using a Kernel Approach", Neural Computation, 2000.

GDA is a method designed for non-linear feature extraction. The object of GDA is to find a non-linear transformation that maximizes the ratio between the between-class variance and the total variance of transformed data. In the linear case, maximization of the ratio between the variances is achieved via the eigenvalue decomposition similar to LDA.

The non-linear extension is performed by mapping the data from the original space $Y$ to a new high dimensional feature space Z by a function $\Phi: Y \rightarrow Z$. The problem of high dimensionality of the new space Z is avoided using a kernel function $k: Y \times Y \rightarrow R$. The value of the kernel function $k_{(yi,yj)}$ is equal to the dot product of non-linearly mapped vectors $\Phi(y_i)$ and $\Phi(y_j)$, i.e., $k(y_i, y_j) = \Phi(y_i)^T \Phi(y_j)$, which can be evaluated efficiently without explicit mapping the data into the high dimensional space.

It is assumed that $y_{k,i}$ denotes the $i$-th training pattern of $k$-th class, $M$ is the number of classes, $N_i$ is the number of patterns in the $i$-th class, and $N = \sum_{k=1}^{M} N_k$ denotes the number of all patterns. If it is assumed that the data are centered, the total scatter matrix of the non-linearly mapped data is

$$S_T = \frac{1}{N} \sum_{k=1}^{M} \sum_{i=1}^{N_k} \Phi(y_{k,i}) \Phi(y_{k,i})^T .$$

The between-class scatter matrix of non-linearly mapped data is defined as

$$S_B = \frac{1}{N} \sum_{k=1}^{M} N_K \Phi(\mu_k) \Phi(\mu_k)^T ,$$

where

$$\Phi(\mu_k) = \frac{1}{N_k} \sum_{i=1}^{N_k} \Phi(y_{k,i}) .$$

The aim of the GDA is to find such projection vectors $w \in Z$ which maximize the ratio

$$\lambda = \frac{w^T S_B w}{w^T S_T w} \tag{3}$$

It is well known that the vectors $w \in Z$ maximizing the ratio, such as Equation 3, can be found as the solution of the generalized eigenvalue problem

$$\lambda S_T w = S_B w \tag{4}$$

where $\lambda$ is the eigenvalue corresponding to the eigenvector w.

To employ the kernel functions all computations must be carried out in terms of dot products. To this end, the projection vector w is expressed as a linear combination of training patterns, i.e.,

$$w = \sum_{k=1}^{M} \sum_{i=1}^{N_k} \alpha_{k,i} \Phi(y_{k,i}) \qquad (5)$$

where $\alpha_{ki}$ are some real weights. Using Equation 5, Equation 3 can be expressed as

$$\lambda = \frac{\alpha^T KWK\alpha}{\alpha^T KK\alpha} \qquad (6)$$

where the vector $\alpha=(\alpha_k)$, $k=1, ..., M$ and $\alpha_k=(\alpha_{k,i})$, $i = 1, ..., N_k$. The kernel matrix $K$ $(N \times N)$ is composed from the dot products of non-linearly mapped data, i.e.,

$$K = (K_{k,l})_{k=1,...,M,\, l=1,...,M} \qquad (7)$$

where

$$K_{k,l} = (k(y_{k,i}, y_{l,j}))_{i=1,...,N_k,\, j=1,...N_l}.$$

The matrix $W$ $(N \times N)$ is a block diagonal matrix

$$W = (W_k)_{k=1,...,M} \qquad (8)$$

where $k$-th matrix $W_k$ on the diagonal has all elements which are equal to $\dfrac{1}{N_k}$.

Solving the eigenvalue problem Equation 6 yields the coefficient vectors $\alpha$ that define the projection vectors $w \in Z$. A projection of a testing vector v is computed as

$$w^T \Phi(y) = \sum_{k=1}^{M} \sum_{i=1}^{N_k} \alpha_{k,i} k(y_{k,i}, y) \qquad (9)$$

As mentioned above, the training vectors are supposed to be centered in the feature space $Z$. The centered vector $\Phi(y)'$ is computed as

$$\Phi(y)' = \Phi(y) - \frac{1}{N} \sum_{k=1}^{M} \sum_{i=1}^{N_k} \Phi(y_{k,i}) \qquad (10)$$

which can be done implicitly using the centered kernel matrix $K'$ (instead of $K$) since the data appears in terms of dot products only. The centered kernel matrix $K'$ is computed as

$$K' = K - \frac{1}{N} IK - \frac{1}{N} KI - \frac{1}{N^2} IKI \qquad (11)$$

where matrix *I (N×N)*
has all elements equal to *1*. Similarly, a testing vector *y* must be centered by Equation 10 before projecting by Equation 9. Application of Equations 10 and 9 to the testing vector y is equivalent to using the following term for projection

$$w^T \Phi(y)' = \sum_{k=1}^{M} \sum_{i=1}^{N_k} \beta_{k,i} k(y_{k,i}, y) + b \qquad (12)$$

The centered coefficients $\beta_{k,i}$ are computed as

$$\beta_{k,i} = \alpha_{k,i} - \frac{1}{N} J\alpha \qquad (13)$$

and bias *b* as

$$b \approx -\frac{1}{N} JKJ\alpha + \frac{1}{N^2} J\alpha JKJ \qquad (14)$$

where the column vector *J (N×1)* has all terms equal to *1*.
In conclusion, to apply the GDA method, a kernel function to be used should previously be specified, transformation coefficients β and *b* should be computed, and a query face image input later is transformed through the use of Equation 12 using the computed transformation coefficients β and *b*.
The present invention proposes to synthesize feature vectors for all facial components (i.e., component descriptors) calculated by LDA transformation (hereinafter referred to as a "first LDA transformation") into a single vector $y_i = \begin{bmatrix} y_i^1 y_i^2 \cdots y_i^L \end{bmatrix}$ and to extract a related feature vector (i.e., a face descriptor $f_i$) through LDA transformation or GDA transformation (hereinafter referred to as a "second LDA/GDA transformation"). The apparatus and method for retrieving face images using combined component descriptors preconditions training according to the following '1. Training Stage', and '2. Retrieval Stage' is performed when a query face image is input.

1. Training Stage

A. Training face images $x_i$ are each divided into L face components according to an image division algorithm and are trained, and first LDA transformation matrices $W^k$ (k=1, 2, . . ., L) are calculated for the L facial components.
B. The training face images $x_i$ are first LDA transformed using the calculated $W^k$ (k=1, 2, · · ·, L) and equation $y^k = (W^k)^T z^k$, and LDA component descriptors $y_i^1, y_i^2, \cdots, y_i^L$ are calculated.

C. With respect to each of the training face images $x_i$, the LDA component descriptors $y_i^1, y_i^2, \cdots, y_i^L$ are vectors normalized and synthesized into a single vector $y_i = \begin{bmatrix} y_i^1 y_i^2 \cdots y_i^L \end{bmatrix}$.

The vector normalization is performed using Equation $a' = \frac{a}{\|a\|}$ where *a* denotes a vector with a length of n.

D. A transformation matrix or transformation coefficient required for the second transformation (LDA or GDA) is calculated by training the single vectors.
When the second LDA transformation is applied, a second LDA transformation matrix W for the single vectors is calculated. When the second GDA transformation is applied, a kernel function is specified and transformation coefficients β and b depending upon the kernel function specified by the training are calculated.

E. With respect to the training face images $x_i$, face descriptors $f_i$ to which the first LDA transformation and the second LDA/GDA transformation have been applied are calculated using the calculated transformation matrix or calculated transformation coefficients.

2. Retrieval Stage

A. An input query x is divided into L face components according to an image division algorithm. The L divided face components are first LDA transformed using first LDA transformation matrices $W^k$ (k=1, 2, $\cdots$, L) calculated for the L facial components in the training stage.

B. LDA component descriptors $y_i^1, y_i^2, \cdots, y_i^L$ with respect to the input query face image x are vectors normalized and synthesized into $y_i = \left[ y_i^1 y_i^2 \cdots y_i^L \right]$.

C. In the case where the second LDA transformation is applied, the single vector is second LDA transformed into a face descriptor f using the second LDA transformation matrix in the training stage. In the case where the second GDA transformation is applied, the single vector is second GDA transformed into a face descriptor f using a specified kernel function and training-specified transformation coefficients $\beta$ and b.

D. The similarities are determined between the face descriptor f calculated with respect to the input query face image x and the face descriptors $f_i$ of the training face images calculated in 'E' of the training stage according to a certain similarity determination method.

For reference, the transformation matrices, including the first LDA transformation matrices $W^k$ and the second LDA transformation matrices $W^{2nd}$ calculated in the training stage, and the transformation coefficients $\beta$ and b used for the second GDA transformation should be calculated before the retrieval stage, but the face descriptor $f_i$ (hereinafter z=f) may be calculated and stored in the training stage, or may be calculated together with an input query face image when the query face image is input.

An entire procedure of the present invention is described in detail with reference to the accompanying drawings.

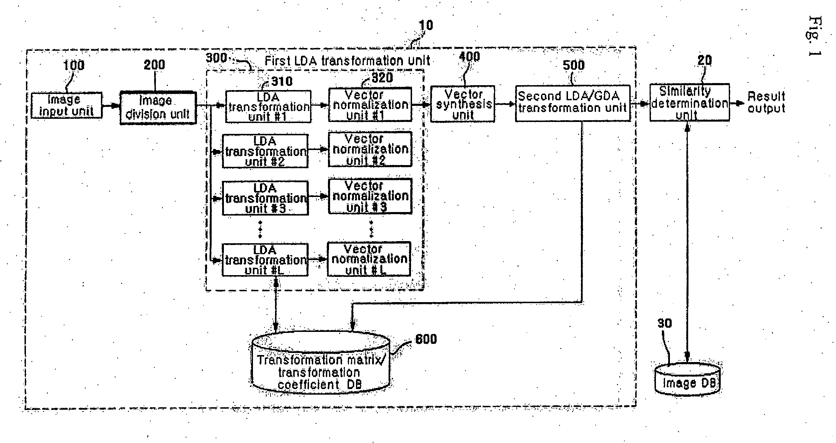

FIG. 1 is a diagram showing the construction of apparatus for retrieving face images according to an embodiment of the present invention.

The face image retrieving apparatus of the embodiment of the present invention may be divided into a cascaded LDA transformation unit 10, a similarity determination unit 30, and an image DB 30 in which training face images are stored. A face descriptor z of an input query face image is calculated through the cascaded LDA transformation unit 10. The similarity determination unit 20 determines the similarities between the calculated face descriptor z of the query face image and face descriptors $Z_i$ of the training face images stored in the image DB 30 according to a certain similarity determination method, and outputs retrieval results. The output retrieval results are a training face image with the highest similarity, or training face images that have been searched for and are arranged in the order of similarities.

The face descriptors $z_i$ are previously calculated in a training stage and stored in the image DB 30, or are calculated by inputting a training face image together with a query face image to the cascaded LDA transformation unit 10 when the query face image is input.

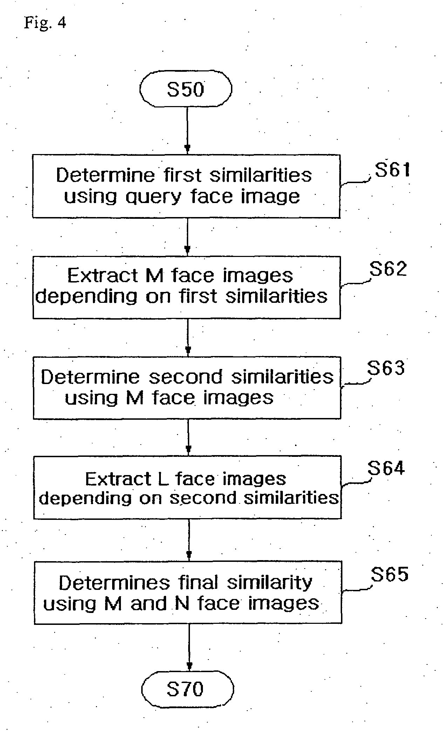

A method of determining similarity according to an embodiment of the present invention will be described later in the detailed description of FIG. 4.

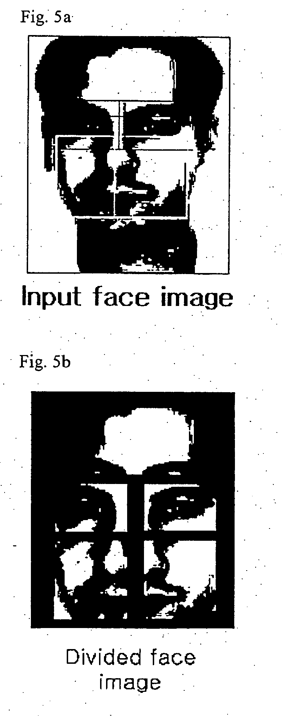

The construction of the cascaded LDA transformation unit 10 is described in detail with reference to FIG. 1. The cascaded LDA transformation unit 10 includes an image input unit 100 for receiving a face image as shown in FIG. 5A, and an image division unit 200 for dividing the face image received through the image input unit 100 into L facial components, such as eyes, a nose and a mouth. An exemplary face image divided by the image division unit 200 is illustrated in FIG. 5B. In FIG. 5B, the face image is divided into five components on the basis of eyes, a nose and a mouth, and the divided five components are partially overlapped with each other. The reason why the divided components are partially overlapped with each other is to prevent the features of a face from being lost by the division of the face image.

L facial components divided by the image division unit 200 are LDA transformed into the component descriptors of the facial components by the first LDA transformation unit 300. The first LDA transformation unit 300 includes L LDA transformation units 310 for LDA transforming L facial components divided by the image division unit 200 into the component descriptors of the facial components, and L vector normalization units 320 for vector normalizing the component descriptors transformed by the LDA transformation units 310. As described above, the vector normalization of component descriptors is performed using the following equation

$$a' = \frac{a}{\|a\|}$$

where $a$ denotes a vector having a length of n.

The L LDA transformation units 310 LDA transform the components of an input query face image using a first LDA transformation matrix $W^k$ (k=1, 2, ···, L) for each of the components stored in a transformation matrix/transformation coefficient DB 600 according to the training results of the training face images within the image DB 30. For example, when the component, including the forehead of FIG. 5B, is 1, that is, k=1, this component including the forehead is LDA transformed using $W^1$. When the component, including the right eye of FIG. 5B, is 2, that is, k=2, this component, including the forehead, is LDA transformed using $W^2$.

For reference, in this embodiment, the L LDA transformation units 310 and the L vector normalization units 320 may be replaced with a single LDA transformation unit 310 and a single vector normalization unit 320 that can process a plurality of facial components in parallel or in sequence, respectively.

L component descriptors vector normalized in the L vector normalization units 320 are synthesized into one vector in a vector synthesis unit 400. The synthesized vector is formed by synthesizing L divided components, so it has L times of the dimensions of single component vector.

A single vector synthesized in the vector synthesis unit 400 is LDA or GDA transformed in the second LDA transformation unit or the second GDA transformation unit 500 (hereinafter referred to as the "second LDA/GDA transformation unit).

The second LDA/GDA transformation unit 500 calculates the face descriptor z by performing second LDA transformation using a second LDA transformation matrix $W^{2nd}$ stored in the transformation matrix/transformation coefficient DB 600 (in the case of the second LDA transformation unit), or by performing second GDA transformation using a previously specified kernel function and training-specified training transformation coefficients β and b stored in the transformation matrix/transformation coefficient DB 600 according to the training results of the training face images within the image DB 30 (in the case of the second GDA transformation unit).

After the face descriptor z of the query face image is calculated in the cascaded LDA transformation unit 10, the similarity determination unit 20 determines the similarities between the face descriptors $z_i$ of the training face images stored in the image DB 30 and the calculated face descriptor z of the query face image according to a certain similarity determination method, and outputs retrieval results. The similarity determination method used in the similarity determination unit 20 may be a conventional method of simply calculating similarities by calculating a normalized-correlation between the calculated face descriptor z of the query face image and the face descriptors $z_i$ of the training face images stored in the image DB 30, or a joint retrieval method to be described later with reference to FIG. 4. For reference the conventional method of calculating similarities d(z1, z2) by calculating the normalized correlation is performed using the following equation

$$d(z_1, z_2) = \frac{z_1 \cdot z_2}{\|z_1\| \, \|z_2\|}$$

For reference, in the face image retrieving apparatus according to the embodiment of the present invention, all the modules of the apparatus may be implemented by hardware, part of the modules may be implemented by software, or all the modules may be implemented by software. Accordingly, it does not depart from the scope and spirit of the invention to implement the apparatus of the present invention using hardware or software. Further, it is apparent from the above description that the apparatus of the present invention is implemented by software and modifications and changes due to the software implementation of the apparatus are possible without departing from the scope and spirit of the invention.

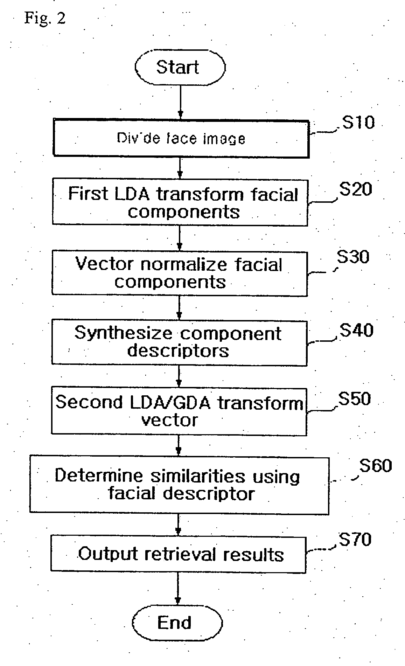

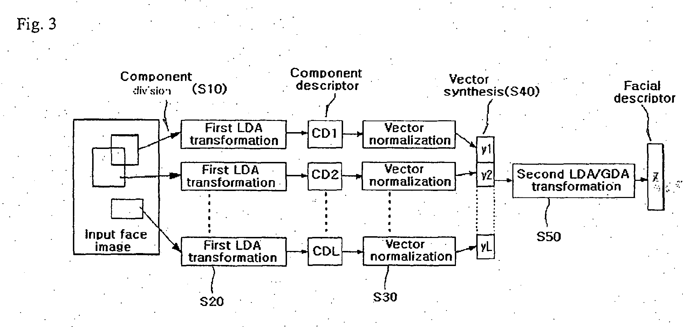

A method of retrieving face images using combined component descriptors according to an embodiment of the present invention is described with reference to FIGS. 2 and 3.

FIG. 2 is a flowchart showing the face image retrieving method according to the embodiment of the present invention. FIG. 3 is a block diagram showing the face image retrieving method according to the embodiment of the present invention.

When a query face image x is input to the image input unit 100, the query face image x is divided into L facial components according to a specified component division algorithm in the image division unit 100 at step S10. In the L LDA transformation unit 310 of the first LDA transformation unit 300, the L components of the input query face image are first LDA transformed using the first LDA transformation matrix $W^k$ (k=1, 2, · · ·, L) stored in the transformation matrix/transformation coefficient DB 600 according to the training results of the training face images within the image DB 30 at step S20.

The component descriptors CD1, CD2, $\cdots$, CDL are vector normalized LDA transformed in the L LDA transformation unit 310 are vector normalized by the L vector normalization units 320 at step S30, and, thereafter, are synthesized into a single vector having dimensions at step S40.

The single vector into which the component descriptors are synthesized is thereafter second LDA/GDA transformed by the LDA/GDA transformation unit 500 at step 550.

The face descriptor z is calculated by performing the second LDA transformation matrix $W^{2nd}$ calculated in the training stage in the case of the second LDA transformation unit 500, or by performing the second GDA transformation using a specified kernel function and training-specified transformation coefficients $\beta$ and b in the case of the second GDA transformation unit.

Thereafter, with respect to the input query face image x, the similarity determination unit 20 determines the similarities between the face descriptor z calculated in the second LDA/GDA transformation unit 500 and the face descriptors zi of the training face images stored in the image DB 30 according to a certain similarity determination method at step S60, and outputs retrieval results at step S70. As described above, the output retrieval results are a training face image with the highest similarity or training face images that have been searched for and are arranged in the order of similarities. The face descriptors $z_i$ are previously calculated in a training stage and stored in the image DB 30, or are calculated by inputting a training face image together with a query face image to the cascaded LDA transformation unit 10 when the query face image is input.

The similarity determination method according to an embodiment of the present invention is described with reference to FIG. 4.

In the embodiment of the present invention, the joint retrieval method is used as the similarity determination method. The joint retrieval method is the method in which the similarity determination unit 20 extracts the first similar face images from the image DB 30 falling within a certain similarity range on the basis of the input query face image in the order of similarities, extracts the second similar face images from the image DB 30 falling within a certain similarity range on the basis of the first similar face images, and utilizing the first and second similar face images as a kind of weights when determining the similarities between an input query face image and the training face images of the image DB.

Although the above-described embodiment determines similarities by extracting the second similar face images, the present invention can utilize a plurality of similar face images including the third similar face images, the fourth similar face images, etc.

The joint retrieval method according to the present invention is expressed as the following equation 15.

$$\text{Joint} \qquad S_{q,m} = S_{q,m} + \sum_{k=1}^{M} S_{q,h^{1st}_k} \cdot S_{h^{1st}_k,m} + \sum_{k=1}^{M} S_{q,h^{1st}_k} \sum_{l=1}^{L} S_{h^{1st}_k,h^{2nd}_l} \cdot S_{h^{2nd}_l,m}$$

$$(15)$$

where $S_{i,j}$ denotes the similarity between images i and j, $h^{1st}$ and $h^{2nd}$ denote the indexes of face images highly ranked in first and second similar face images, respectively, and Joint $S_{q,m}$ in the equation 15 denotes the final similarity between a query face image q and a certain training face image m stored in the image DB 30.

For reference, $S_{i,j}$ may be calculated using the conventional cross-correlation and

$$S_{i,j} = d(z_i, z_j) = \frac{z_i \cdot z_j}{\|z_i\| \, \|z_j\|}$$

In equation 15, $S_{q,m}$ denotes the similarities between a query face image q and the face images m of the image DB 30, $S_{q,h_1^{st}_k}$ denotes the similarities between the query face image q and the first similar face images, $S_{h_1^{st}_k,m}$ denotes the similarities between the first similar face images and the face images m of the image DB 30, $S_{h_1^{st}_k,h_2^{nd}_l}$ denotes the similarities between the first similar face images and the second similar face images, $S_{h_2^{nd}_l,m}$ denotes the similarities between the second similar face images and the face images m of the image DB 30, M denotes the number of the first similar face images, and L denotes the number of the second similar face images with respect to each of the second similar face images.

With reference to FIG. 4, the similarity determination method according to an embodiment of the present invention is described below.

After the first similarity determination in which the similarities are determined between a query face image and the training face images of the image DB 30 at step S61, first similar face images are extracted from the image DB 30 in the order of similarities according to the first similarity determination results at step S62.

Thereafter, there is performed second similarity determination in which similarities are determined between the extracted first similar face images and the training face images of the image DB 30 at step S63, second similar face images with respect to each of the first similar face images are extracted from the image DB 30 in the order of similarities according to the second similarity determination results at step S64. A final similarity is determined by calculating the similarities $S_{q,m}$ between the query face image and the training face images of the image DB at step S65.

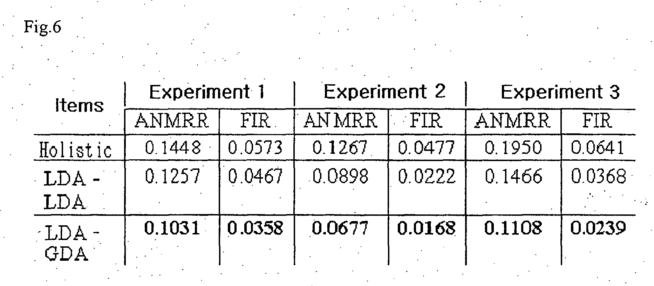

FIG. 6 is a table of experimental results obtained by carrying out experiments using a conventional face retrieval method and the face retrieval method of the present invention. In this table it can be seen that the face retrieval method of the embodiment of the present invention exhibited improved performance compared with the conventional face retrieval method.

In the left column of FIG. 6, 'Holistic' denotes the case where LDA transformation is applied to an entire face image without the division of the face image. 'LDA-LDA' denotes the face retrieval method according to an embodiment of the present invention in which second LDA transformation is applied after first LDA transformation. 'LDA-GDA' denotes the face retrieval method according to another embodiment of the present invention in which second GDA transformation is applied after the first LDA transformation. In 'LDA-GDA', a radial basis function was used as a kernel function.

In the uppermost row of FIG. 6, 'experiment 1' was carried out in such a way that five face images with respect to each of 160 persons, that is, a total of 800 face images, were trained and five face images with respect to each of 474 persons, that is, a total of 2375 face images, were used as query face images. 'Experiment 2' was carried out in such a way that five face images with respect to each of 337 persons, that is, a total of 1685 face images, were trained and five face images with respect to each of 298 persons, that is, a total of 1490 face images, were used as query face images. 'Experiment 3' was carried out in such a way that a total of 2285 face images were trained and a total of 2090 face images were used as query face images.

In accordance with the experimental results shown in FIG. 6, the face image retrieval methods according to the embodiments of the present invention have improved Average Normalized Modified Recognition Rates (ANMRRs) and False Identification Rates (FIRs) compared with the conventional face retrieval method.

As described above, the present invention provides an apparatus and method for retrieving face images using combined component descriptors, which generates lower-dimensional face descriptors by synthesizing component descriptors for facial components into a single face descriptor, thus enabling precise face image retrieval while reducing the amount of processed data and retrieval time.

Additionally, in the apparatus and method of the present invention, the joint retrieval method utilizes an input face image and training face images similar to the input face image as comparison references at the time of face retrieval, thus providing a relatively high face retrieval rate.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

**Claims**

1. An apparatus for retrieving face images using combined component descriptors, comprising:

    an image division unit for dividing an input image into facial components;
    a first Linear Discriminant Analysis (LDA) transformation unit for LDA transforming the facial components into component descriptors of the facial components;
    a vector synthesis unit for synthesizing the transformed component descriptors into a single vector;
    a transformation unit for transforming the single vector into a single face descriptor wherein the transformation unit is a Generalized Discriminant Analysis (GDA) transformation unit or a second LDA transformation unit; and
    a similarity determination unit for determining similarities between an input query face image and face images stored in an face image database (DB) by comparing a face descriptor of the input query face image with face descriptors of the face images stored in the face image DB.

2. The apparatus as set forth in claim 1, wherein the first LDA transformation unit comprises:

    LDA transformation units for LDA transforming the facial components into component descriptors of the facial components; and
    vector normalization units for vector normalizing the transformed component descriptors into a unitary vector.

3. The apparatus as set forth in claim 2, wherein the LDA transformation units and vector normalization units are each provided for the facial components.

4. The apparatus as set forth in any of claims 1 to 3, further comprising a transformation matrix/transformation coefficient DB for storing a transformation matrix or transformation coefficients calculated by training the face images stored in the image DB,

   wherein the LDA transformation unit or the GDA transformation unit performs LDA transformation or GDA transformation using the stored transformation matrix or transformation coefficients.

5. The apparatus as set forth in any of claims I to 6, wherein:

   the image DB is arranged to store face descriptors of the face images; and
   the similarity determination unit is arranged to compare the input query face image with the face images of the image DB by comparing the face descriptor of the input query face image with the face descriptors of the face images stored in the image DB.

6. The apparatus as set forth in any preceding claim, wherein the divided face components are partially overlapped with each other.

7. The apparatus as set forth in any preceding claim, wherein the face components into which the input face image is divided comprises eyes, a nose and a mouth.

8. The apparatus as set forth in any preceding claim, wherein the similarity determination unit extracts first similar face images similar to the input query face image and second similar face images similar to the first face images from the image DB, and determines similarities between the input query face image and the face images of the image DB using the similarities between the input query face image and the second similar face images.

9. The apparatus as set forth in claim 8, wherein the determination of the similarities between the input query face image and the face images of the image DB is performed using the following equation

$$\text{Joint } S_{q,m} = S_{q,m} + \sum_{k=1}^{M} S_{q,h^{1st}k} \cdot S_{h^{1st}k,m} + \sum_{k=1}^{M} S_{q,h^{1st}k} \sum_{l=1}^{L} S_{h^{1st}k,h^{2nd}l} \cdot S_{h^{2nd}l,m}$$

where $S_{q,m}$ denotes similarities between the input query face image q and the face images m of the image DB, $S_{q,h1}{}^{st}{}_{k}$ denotes similarities between the query face image q and the first similar face images, $S_{h1}{}^{st}{}_{k,m}$ denotes similarities between the first similar face images and the face images m of the image DB, $S_{h1}{}^{st}{}_{k,h2}{}^{nd}{}_{l}$ denotes similarities between the first similar face images and the second similar face images, $S_{h2}{}^{nd}{}_{l,m}$ denotes similarities between the second similar face images and the face images m of the image DB, M denotes a number of the first similar face images, and L denotes a number of the second similar face images with respect to each of the second similar face images.

10. An apparatus according to any preceding claim wherein teh transformation unit for transforming the single vector into a single face descriptor is a GDA transformation unit.

11. An apparatus according to any of claims 1 to 9 wherein the transformation unit for transforming the single vector into a single face descriptor is a second LDA transformation unit.

12. A computer implemented method of retrieving face images using combined component descriptors, comprising the steps of:

   dividing an input image into facial components;
   LDA transforming the facial components into component descriptors of the facial components;
   synthesizing the transformed component descriptors into a single vector;
   GDA or LDA transforming the single vector into a single face descriptor; and
   determining similarities between an input query face image and face images stored in a face image DB by comparing a face descriptor of the input query face image with face descriptors of the face images stored in the face image DB.

13. The method as set forth in claim 12, wherein the step of LDA transforming the divided facial components comprises the steps of:

LDA transforming the facial components into component descriptors of the facial components; and
vector normalizing the transformed component descriptors into a unitary vector.

14. The method as set forth in claim 19, wherein the LDA transforming or the GDA transforming is carried out using a transformation matrix or a transformation coefficient calculated by training the face images stored in the image DB.

15. The method as set forth in any of claims 12 to 14, further comprising the step of outputting the face images of the image DB retrieved based on the determined similarities

16. The method as set forth in any of claims 12 to 15, wherein the comparing of the input query face image with the face images of the image DB is performed by comparing the face descriptor of the input query face image with the face descriptors of the face images stored in the image DB.

17. The method as set forth in any of claims 12 to 16, wherein the divided face components are partially overlapped with each other.

18. The method as set forth in any of claims 12 to 17, wherein the face components into which the input face image is divided comprises eyes, a nose and a mouth.

19. The method as set forth in any of claims 12 to 18, wherein the step of determining similarities comprises the steps of:

extracting first similar face images similar to the input query face image and second similar face images similar to the first face images from the image DB; and
determining similarities between the input query face image and the face images of the image DB using the similarities between the input query face image and the second similar face images.

20. The method as set forth in claim 19, wherein the step of extracting the first and second similar face images comprises:

the first similarity determination step of determining similarities between the input query face image and the face images of the image DB;
the first similar face image extraction step of extracting the first similar face images in an order of similarities according to results of the first similarity determination step;
the second similarity determination step of determining similarities between the first similar face images and the face images of the image DB; and
the second similar face image extraction step of extracting the second similar face images for each of the first similar face images in an order of similarities according to results of the second similarity determination step.

21. The method as set forth in claim 20, wherein the determining of similarities between the input query face image and the face images of the image DB is performed using the following equation

$$\text{Joint } S_{q,m} = S_{q,m} + \sum_{k=1}^{M} S_{q,h1^{st}_k} \cdot S_{h1^{st}_{k,m}} + \sum_{k=1}^{M} S_{q,h1^{st}_k} \sum_{l=1}^{L} S_{h1^{st}_k,h2^{nd}_l} \cdot S_{h2^{nd}_{l,m}}$$

where $S_{q,m}$ denotes similarities between the input query face image q and the face images m of the image DB, $S_{q,h1^{st}_k}$ denotes similarities between the query face image q and the first similar face images, $S_{h1^{st}_{k,m}}$ denotes similarities between the first similar face images and the face images m of the image DB, $S_{h1^{st}_{k,h2^{nd}_l}}$ denotes similarities between the first similar face images and the second similar face images, $S_{h2^{nd}_{l,m}}$ denotes similarities between the second similar face images and the face images m of the image DB, M denotes a number of the first similar face images, and L denotes a number of the second similar face images with respect to each of the second similar face images.

**22.** A method according to any of claims 12 to 21 wherein the step of transforming the single vector into a single face descriptor is a GDA transforming step.

**23.** A method according to any of claims 12 to 21 wherein the step of transforming the single vector into a single face descriptor is a LDA transforming step.

**Patentansprüche**

**1.** Vorrichtung zum Wiedergewinnen von Gesichtsbildern unter Verwendung kombinierter Komponenten-Deskriptoren, die umfasst:

eine Bildunterteilungseinheit zum Unterteilen eines eingegebenen Bildes in Gesichts-Komponenten;
eine erste LDA (Linear Discriminant Analysis)-Transformationseinheit zum Durchführen von LDA-Transformation der Gesichts-Komponenten in Komponenten-Deskriptoren der Gesichts-Komponenten;
eine Vektor-Syntheseeinheit zum Synthetisieren der transformierten Komponenten-Deskriptoren zu einem einzelnen Vektor;
eine Transformationseinheit zum Transformieren des einzelnen Vektors in einen einzelnen Gesichts-Deskriptor, wobei die Transformationseinheit eine GDA (Generalized Discriminant Analysis)-Transformationseinheit oder eine zweite LDA-Transformationseinheit ist; und
eine Ähnlichkeits-Bestimmungseinheit zum Bestimmen von Ähnlichkeiten zwischen einem eingegebenen Abfrage-Gesichtsbild und in einer Gesichtsbild-Datenbank gespeicherten Gesichtsbildern durch Vergleichen eines Gesichts-Deskriptors des eingegebenen Abfrage-Gesichtsbildes mit Gesichts-Deskriptoren der in der Gesichtsbild-Datenbank gespeicherten Gesichtsbilder.

**2.** Vorrichtung nach Anspruch 1, wobei die erste LDA-Transformationseinheit umfasst:

LDA-Transformationseinheiten zum Durchführen von LDA-Transformation der Gesichts-Komponenten zu Komponenten-Deskriptoren der Gesichts-Komponenten; und
Vektor-Normalisierungseinheiten zum Durchführen von Vektornormalisierung der transformierten Komponenten-Deskriptoren zu einem Einheitsvektor.

**3.** Vorrichtung nach Anspruch 2, wobei die LDA-Transformationseinheiten und Vektor-Normalisierungseinheiten jeweils für die Gesichts-Komponenten vorhanden sind.

**4.** Vorrichtung nach einem der Ansprüche 1 bis 3, die des Weiteren eine Transformationsmatrix/Transformationskoeffizienten-Datenbank zum Speichern einer Transformationsmatrix oder von Transformationskoeffizienten umfasst, die berechnet werden, indem die in der Bilddatenbank gespeicherten Gesichtsbilder trainiert werden, wobei die LDA-Transformationseinheit oder die GDA-Transformationseinheit LDA-Transformation oder GDA-Transformation unter Verwendung der gespeicherten Transformationsmatrix oder der gespeicherten Transformationskoeffizienten durchführt.

**5.** Vorrichtung nach einem der Ansprüche 1 bis 6, wobei:

die Bilddatenbank so eingerichtet ist, dass sie Gesichts-Deskriptoren der Gesichtsbilder speichert; und
die Ähnlichkeits-Bestimmungseinheit so eingerichtet ist, dass sie das eingegebene Abfrage-Gesichtsbild mit den Gesichtsbildern der Bilddatenbank vergleicht, indem sie den Gesichts-Deskriptor des eingegebenen Abfrage-Gesichtsbildes mit den Gesichts-Deskriptoren der in der Bilddatenbank gespeicherten Gesichtsbilder vergleicht.

**6.** Vorrichtung nach einem der vorangehenden Ansprüche, wobei die unterteilten Gesichts-Komponenten einander teilweise überlappen.

**7.** Vorrichtung nach einem der vorangehenden Ansprüche, wobei die Gesichts-Komponenten, in die das eingegebene Gesichtsbild unterteilt wird, Augen, eine Nase und einen Mund umfassen.

**8.** Vorrichtung nach einem der vorangehenden Ansprüche, wobei die Ähnlichkeits-Bestimmungseinheit erste ähnliche Gesichtsbilder, die dem eingegebenen Abfrage-Gesichtsbild ähneln, und zweite ähnliche Gesichtsbilder, die den ersten Gesichtsbildern ähneln, aus der Bilddatenbank extrahiert und Ähnlichkeiten zwischen dem eingegeben Abfrage-Gesichtsbild und den Gesichtsbildern der Bilddatenbank unter Verwendung der Ähnlichkeiten zwischen dem eingegebenen Abfrage-Gesichtsbild und den zweiten ähnlichen Gesichtsbildern bestimmt.

**9.** Vorrichtung nach Anspruch 8, wobei die Bestimmung der Ähnlichkeiten zwischen dem eingegebenen Abfrage-Gesichtsbild und den Gesichtsbildern der Bilddatenbank unter Verwendung der folgenden Gleichung durchgeführt wird:

$$\text{Gesamt } S_{q,m} = S_{q,m} + \sum_{k=1}^{M} S_{q,h^{1st}_k} \cdot S_{h^{1st}_k,m} + \sum_{k=1}^{M} S_{q,h^{1st}_k} \sum_{l=1}^{L} S_{h^{1st}_k,h^{2nd}_l} \cdot S_{h^{2nd}_l,m}$$

wobei $S_{q,m}$ Ähnlichkeiten zwischen dem eingegebenen Abfrage-Gesichtsbild q und den Gesichtsbildern m der Bilddatenbank bezeichnet, $S_{q,h}^{1st}{}_k$ Ähnlichkeiten zwischen dem Abfrage-Gesichtsbild q und den ersten ähnlichen Gesichtsbildern bezeichnet, $S_h^{1st}{}_{k,m}$ Ähnlichkeiten zwischen den ersten ähnlichen Gesichtsbildern und den Gesichtsbildern m der Bilddatenbank bezeichnet, $S_h^{1st}{}_{k,h}{}^{2nd}{}_l$ Ähnlichkeiten zwischen den ersten ähnlichen Gesichtsbildern und den zweiten ähnlichen Gesichtsbildern bezeichnet, $S_h^{2nd}{}_{l,m}$ Ähnlichkeiten zwischen den zweiten ähnlichen Gesichtsbildern und den Gesichtsbildern m der Bilddatenbank bezeichnet, M eine Anzahl der ersten ähnlichen Gesichtsbilder bezeichnet und L eine Anzahl der zweiten ähnlichen Gesichtsbilder in Bezug auf jedes der zweiten ähnlichen Gesichtsbilder bezeichnet.

**10.** Vorrichtung nach einem der vorangehenden Ansprüche, wobei die Transformationseinheit zum Transformieren des einzelnen Vektors in einen einzelnen Gesichts-Deskriptor eine GDA-Transformationseinheit ist.

**11.** Vorrichtung nach einem der Ansprüche 1 bis 9, wobei die Transformationseinheit zum Transformieren des einzelnen Vektors in einen einzelnen Gesichts-Deskriptor eine zweite LDA-Transformationseinheit ist.

**12.** Computerimplementiertes Verfahren zum Wiedergewinnen von Gesichtsbildern unter Verwendung kombinierter Komponenten-Deskriptoren, das die folgenden Schritte umfasst:

Unterteilen eines eingegebenen Bildes in Gesichtskomponenten;
Durchführen von LDA-Transformation der Gesichts-Komponenten in Komponenten-Deskriptoren der Gesichts-Komponenten;
Synthetisieren der transformierten Komponenten-Deskriptoren zu einem einzelnen Vektor;
Durchführen von GDA- oder LDA-Transformation des einzelnen Vektors zu einem einzelnen Gesichts-Deskriptor; und
Bestimmen von Ähnlichkeiten zwischen einem eingegebenen Abfrage-Gesichtsbild und in einer Gesichtsbild-Datenbank gespeicherten Gesichtsbildern durch Vergleichen eines Gesichts-Deskriptors des eingegebenen Abfrage-Gesichtsbildes mit Gesichts-Deskriptoren der in der Gesichtsbild-Datenbank gespeicherten Gesichtsbilder.

**13.** Verfahren nach Anspruch 12, wobei der Schritt des Durchführens von LDA-Transformation der unterteilten Gesichts-Komponenten die folgenden Schritte umfasst:

Durchführen von LDA-Transformation der Gesichts-Komponenten in Komponenten-Deskriptoren der Gesichts-Komponenten; und
Durchführen von Vektornormalisierung der transformierten Komponenten-Deskriptoren in einen Einheitsvektor.

**14.** Verfahren nach Anspruch 19, wobei das Durchführen von LDA-Transformation oder von GDA-Transformation unter Verwendung einer Transformationsmatrix oder eines Transformationskoeffizienten ausgeführt wird, die/der durch Trainieren der in der Bilddatenbank gespeicherten Gesichtsbilder berechnet wird.

**15.** Verfahren nach einem der Ansprüche 12 bis 14, das des Weiteren den Schritt des Ausgebens der wiedergewonnenen Gesichtsbilder der Bilddatenbank auf Basis der bestimmten Ähnlichkeiten umfasst.

**16.** Verfahren nach einem der Ansprüche 12 bis 15, wobei das Vergleichen des eingegebenen Abfrage-Gesichtsbildes mit den Gesichtsbildern der Bilddatenbank durch Vergleichen des Gesichts-Deskriptors des eingegebenen Abfrage-Gesichtsbildes mit den Gesichts-Deskriptoren der in der Bilddatenbank gespeicherten Gesichtsbilder durchgeführt wird.

17. Verfahren nach einem der Ansprüche 12 bis 16, wobei die unterteilten Gesichtskomponenten einander teilweise überlappen.

18. Verfahren nach einem der Ansprüche 12 bis 17, wobei die Gesichts-Komponenten, in die das eingegebene Gesichtsbild unterteilt wird, Augen, eine Nase und einen Mund umfassen.

19. Verfahren nach einem der Ansprüche 12 bis 18, wobei der Schritt des Bestimmens von Ähnlichkeiten die folgenden Schritte umfasst:

Extrahieren erster ähnlicher Gesichtsbilder, die dem eingegebenen Abfrage-Gesichtsbild ähneln und zweiter ähnlicher Gesichtsbilder, die den ersten Gesichtsbildern ähneln, aus der Bilddatenbank; und
Bestimmen von Ähnlichkeiten zwischen dem eingegebenen Abfrage-Gesichtsbild und den Gesichtsbildern der Bilddatenbank unter Verwendung der Ähnlichkeiten zwischen dem eingegebenen Abfrage-Gesichtsbild und den zweiten ähnlichen Gesichtsbildern.

20. Verfahren nach Anspruch 19, wobei der Schritt des Extrahierens der ersten und zweiten ähnlichen Gesichtsbilder umfasst:

den ersten Ähnlichkeits-Bestimmungsschritt des Bestimmens von Ähnlichkeiten zwischen dem eingegebenen Abfrage-Gesichtsbild und den Gesichtsbildern der Bilddatenbank;
den ersten Schritt zum Extrahieren ähnlicher Gesichtsbilder des Extrahierens der ersten ähnlichen Gesichtsbilder in einer Reihenfolge von Ähnlichkeiten entsprechend Ergebnissen des ersten Ähnlichkeits-Bestimmungsschritts;
den zweiten Ähnlichkeits-Bestimmungsschritt des Bestimmens von Ähnlichkeiten zwischen den ersten ähnlichen Gesichtsbildern und den Gesichtsbildern der Bilddatenbank; und
den zweiten Schritt zum Extrahieren ähnlicher Gesichtsbilder des Extrahierens der zweiten ähnlichen Gesichtsbilder für jedes der ersten ähnlichen Gesichtsbilder in einer Reihenfolge von Ähnlichkeiten entsprechend Ergebnissen des zweiten Ähnlichkeits-Bestimmungsschritts.

21. Verfahren nach Anspruch 20, wobei das Bestimmen von Ähnlichkeiten zwischen dem eingegebenen Abfrage-Gesichtsbild und den Gesichtsbildern der Bilddatenbank unter Verwendung der folgenden Gleichung durchgeführt wird:

$$\text{Gesamt } S_{q,m} = S_{q,m} + \sum_{k=1}^{M} S_{q,h^{1st}_k} \cdot S_{h^{1st}_k,m} + \sum_{k=1}^{M} S_{q,h^{1st}_k} \sum_{l=1}^{L} S_{h^{1st}_k,h^{2nd}_l} \cdot S_{h^{2nd}_l,m}$$

wobei $S_{q,m}$ Ähnlichkeiten zwischen dem eingegebenen Abfrage-Gesichtsbild q und den Gesichtsbildern m der Bilddatenbank bezeichnet, $S_{q,h}{}^{1st}_k$ Ähnlichkeiten zwischen dem Abfrage-Gesichtsbild q und den ersten ähnlichen Gesichtsbildern bezeichnet, $S_{h}{}^{1st}_{k,m}$ Ähnlichkeiten zwischen den ersten ähnlichen Gesichtsbildern und den Gesichtsbildern m der Bilddatenbank bezeichnet, $S_{h}{}^{1st}_{k,h}{}^{2nd}_l$ Ähnlichkeiten zwischen den ersten ähnlichen Gesichtsbildern und den zweiten ähnlichen Gesichtsbildern bezeichnet, $S_{h}{}^{2nd}_{l,m}$ Ähnlichkeiten zwischen den zweiten ähnlichen Gesichtsbildern und den Gesichtsbildern m der Bilddatenbank bezeichnet, M eine Anzahl der ersten ähnlichen Gesichtsbilder bezeichnet und L eine Anzahl der zweiten ähnlichen Gesichtsbilder in Bezug auf jedes der zweiten ähnlichen Gesichtsbilder bezeichnet.

22. Verfahren nach einem der Ansprüche 12 bis 21, wobei der Schritt des Transformierens des einzelnen Vektors zu einem einzelnen Gesichts-Deskriptor ein GDA-Transformationsschritt ist.

23. Verfahren nach einem der Ansprüche 12 bis 21, wobei der Schritt des Transformierens des einzelnen Vektors zu einem einzelnen Gesichts-Deskriptor ein LDA-Transformationsschritt ist.

**Revendications**

1. Dispositif pour récupérer des images de visage à l'aide de descripteurs de composants combinés comprenant :

   une unité de division d'image pour diviser une image d'entrée en des composants faciaux ;
   une première unité de transformation par analyse discriminante linéaire (ADL) pour transformer par ADL les composants faciaux en descripteurs de composants des composants faciaux ;
   une unité de synthèse vectorielle pour synthétiser les descripteurs de composants transformés en un vecteur unique ;
   une unité de transformation pour transformer le vecteur unique en un descripteur de visage unique, où l'unité de transformation est une unité de transformation par analyse discriminante généralisée (ADG) ou une seconde unité de transformation ADL ; et
   une unité de détermination de similarité pour déterminer des similarités entre une image de visage questionnée entrée et des images de visages stockées dans une base de données d'images de visages (BD) en comparant un descripteur de visage de l'image de visage questionnée entrée à des descripteurs de visages des images de visages stockées dans la base de données BD d'images de visages.

2. Dispositif selon la revendication 1, dans lequel la première unité de transformation par ADL comprend :

   des unités de transformation par ADL pour transformer par ADL les composants faciaux en descripteurs de composants des composants faciaux ; et
   des unités de normalisation vectorielle pour normaliser vectoriellement les descripteurs de composants transformés en un vecteur unitaire.

3. Dispositif selon la revendication 2, dans lequel les unités de transformation par ADL et les unités de normalisation vectorielle sont chacune pourvues pour les composants faciaux.

4. Dispositif selon l'une quelconque des revendications 1 à 3, comprenant en outre une base de données BD de matrice de transformation et/ou de coefficients de transformation pour stocker une matrice de transformation ou des coefficients de transformation calculés en instruisant les images de visages stockées dans la base de données BD d'images,
   où l'unité de transformation par ADL ou l'unité de transformation par ADG procèdent à une transformation par ADL ou à une transformation par ADG à l'aide de la matrice de transformation ou des coefficients de transformation stockés.

5. Dispositif selon l'une quelconque des revendications 1 à 6, dans lequel :

   la base de données BD d'images est agencée pour stocker des descripteurs de visages des images de visages ; et
   l'unité de détermination de similarité est agencée pour comparer l'image de visage questionnée entrée aux images de visages de la base de données BD d'images en comparant le descripteur de visage de l'image de visage questionnée entrée aux descripteurs de visages des images de visages stockées dans la base de données BD d'images.

6. Dispositif selon l'une quelconque des revendications précédentes, dans lequel les composants de visage divisés se chevauchent partiellement les uns les autres.

7. Dispositif selon l'une quelconque des revendications précédentes, dans lequel les composants de visage en lesquels l'image de visage entrée est divisée comprennent des yeux, un nez et une bouche.

8. Dispositif selon l'une quelconque des revendications précédentes, dans lequel l'unité de détermination de similarité extrait de la base de données BD des premières images de visage similaires à l'image de visage questionnée entrée et des secondes images de visages similaires aux premières images de visages, et détermine des similarités entre l'image de visage questionnée entrée et les images de visages de la base de données BD d'images à l'aide des similarités entre l'image de visage questionnée entrée et les secondes images de visages similaires.

9. Dispositif selon la revendication 8, dans lequel la détermination des similarités entre l'image de visage questionnée entrée et les images de visages de la base de données BD d'images est effectuée à l'aide de l'équation suivante :

$$Jo\operatorname{int}S_{q,m} = S_{q,m} + \sum_{k=1}^{M} S_{q,h^{1st}k}.S_{h^{1st}k,m} + \sum_{k=1}^{M} S_{q,h^{1st}k}.\sum_{l=1}^{L} S_{h^{1st}k,h^{2nd}l}.S_{h^{2nd}l,m}$$

où $S_{q,m}$ désigne des similarités entre l'image de visage questionnée entrée q et les images de visages m de la base de données BD d'images, $S_{q,h1stk}$ désigne des similarités entre l'image de visage questionnée q et les premières images de visages similaires, $S_{h1stk,m}$ désigne des similarités entre les premières images de visages similaires et les images de visages m de la base de données BD d'images, $S_{h1stk,h2ndl}$ désigne des similarités entre les premières images de visages similaires et les secondes images de visages similaires, $S_{h2nd1,m}$ désigne des similarités entre les secondes images de visages similaires et les images de visages m de la base de données BD d'images, M désigne le nombre des premières images de visages similaires, et L désigne le nombre des secondes images de visages similaires relativement à chacune des secondes images de visages similaires.

10. Dispositif selon l'une quelconque des revendications précédentes, dans lequel l'unité de transformation pour transformer le vecteur unique en un descripteur de visage unique est une unité de transformation par ADG.

11. Dispositif selon l'une quelconque des revendications 1 à 9, dans lequel l'unité de transformation pour transformer le vecteur unique en un descripteur de visage unique est une seconde unité de transformation par ADL.

12. Procédé mis en oeuvre dans un ordinateur pour récupérer des images de visage à l'aide de descripteurs de composants combinés comprenant les étapes consistant à :

diviser une image d'entrée en des composants faciaux ;
transformer par ADL les composants faciaux en descripteurs de composants des composants faciaux ;
synthétiser les descripteurs de composants transformés en un vecteur unique ;
transformer par ADG ou ADL le vecteur unique en un descripteur de visage unique ; et
déterminer des similarités entre une image de visage questionnée entrée et des images de visages stockées dans une base de données d'images de visages BD en comparant un descripteur de visage de l'image de visage questionnée entrée à des descripteurs de visage des images de visages stockées dans la base de données BD d'images de visages.

13. Procédé selon la revendication 12, dans lequel l'étape de transformation par ADL des composants faciaux divisés comprend les étapes consistant à :

transformer par ADL les composants faciaux en descripteurs de composants des composants faciaux ; et
normaliser vectoriellement les descripteurs de composants transformés en un vecteur unitaire.

14. Procédé selon la revendication 9, dans lequel la transformation par ADL ou la transformation par ADG sont effectuées à l'aide d'une matrice de transformation ou de coefficients de transformation calculés en instruisant les images de visages stockées dans la base de données BD d'images.

15. Procédé selon l'une quelconque des revendications 12 à 14, comprenant en outre l'étape consistant à délivrer en sortie les images de visages de la base de données BD d'images retrouvées en se basant sur les similarités déterminées.

16. Procédé selon l'une quelconque des revendications 12 à 15, dans lequel la comparaison de l'image de visage questionnée entrée avec les images de visages de la base de données BD d'images est effectuée en comparant le descripteur de visage de l'image de visage questionnée entrée aux descripteurs de visages des images de visages stockées dans la base de données BD d'images.

17. Procédé selon l'une quelconque des revendications 12 à 16, dans lequel les composants de visage divisés se chevauchent partiellement les uns les autres.

18. Procédé selon l'une quelconque des revendications 12 à 17, dans lequel les composants de visage en lesquels l'image de visage entrée est divisée comprennent des yeux, un nez et une bouche.

**19.** Procédé selon l'une quelconque des revendications 12 à 18, dans lequel l'étape consistant à déterminer des similarités comprend les étapes consistant à :

extraire de la base de données BD des premières images de visages similaires à l'image de visage questionnée entrée et des secondes images de visages similaires aux premières images de visages ; et
déterminer des similarités entre l'image de visage questionnée entrée et les images de visages de la base de données BD d'images à l'aide des similarités entre l'image de visage questionnée entrée et les secondes images de visages similaires.

**20.** Procédé selon la revendication 19, dans lequel l'étape consistant à extraire les premières et secondes images de visages similaires comprend :

la première étape de détermination de similarité consistant à déterminer des similarités entre l'image de visage questionnée entrée et les images de visages de la base de données BD d'images ;
la première étape d'extraction d'images de visages similaires consistant à extraire les premières images de visages similaires suivant un ordre de similarité en fonction des résultats de la première étape de détermination de similarité ;
la seconde étape de détermination de similarité consistant à déterminer des similarités entre les premières images de visages similaires et les images de visages de la base de données BD d'images ; et
la seconde étape d'extraction d'images de visages similaires consistant à extraire les secondes images de visages similaires pour chacune des premières images de visages similaires suivant un ordre de similarités en fonction des résultats de la seconde étape de détermination de similarité.

**21.** Procédé selon la revendication 20, dans lequel la détermination de similarités entre l'image de visage questionnée entrée et les images de visages de la base de données BD d'images est effectuée à l'aide de l'équation suivante :

$$Joint\, S_{q,m} = S_{q,m} + \sum_{k=1}^{M} S_{q,h^{1st}k} . S_{h^{1st}k,m} + \sum_{k=1}^{M} S_{q,h^{1st}k} . \sum_{l=1}^{L} S_{h^{1st}k,h^{2nd}l} . S_{h^{2nd}l,m}$$

où $S_{q,m}$ désigne des similarités entre l'image de visage questionnée entrée q et les images de visages m de la base de données BD d'images, $S_{q,h1stk}$ désigne des similarités entre l'image de visage questionnée q et les premières images de visages similaires, $S_{h1stk,m}$ désigne des similarités entre les premières images de visages similaires et les images de visages m de la base de données BD d'images, $S_{h1stk,h2ndl}$ désigne des similarités entre les premières images de visages similaires et les secondes images de visages similaires, $S_{h2ndl,m}$ désigne des similarités entre les secondes images de visages similaires et les images de visages m de la base de données BD d'images, M désigne le nombre des premières images de visages similaires, et L désigne le nombre des secondes images de visages similaires relativement à chacune des secondes images de visages similaires.

**22.** Procédé selon l'une quelconque des revendications 12 à 21, dans lequel l'étape de transformation du vecteur unique en un descripteur de visage unique est une étape de transformation par ADG.

**23.** Procédé selon l'une quelconque des revendications 12 à 21, dans lequel l'étape de transformation du vecteur unique en un descripteur de visage unique est une étape de transformation par ADL.

Fig. 1

EP 1 388 805 B1

Fig. 2

```
                    ┌──────────┐
                    │  Start   │
                    └────┬─────┘
                         │
                         ▼
         ┌───────────────────────────┐
         │      Divide face image    │ ─── S10
         └───────────────┬───────────┘
                         │
                         ▼
         ┌───────────────────────────┐
         │  First LDA transform facial│ ─── S20
         │        components         │
         └───────────────┬───────────┘
                         │
                         ▼
         ┌───────────────────────────┐
         │    Vector normalize facial │ ─── S30
         │        components         │
         └───────────────┬───────────┘
                         │
                         ▼
         ┌───────────────────────────┐
         │   Synthesize component     │ ─── S40
         │        descriptors        │
         └───────────────┬───────────┘
                         │
                         ▼
         ┌───────────────────────────┐
         │  Second LDA/GDA transform  │ ─── S50
         │          vector           │
         └───────────────┬───────────┘
                         │
                         ▼
         ┌───────────────────────────┐
         │ Determine similarities using│ ─── S60
         │      facial descriptor     │
         └───────────────┬───────────┘
                         │
                         ▼
         ┌───────────────────────────┐
         │   Output retrieval results │ ─── S70
         └───────────────┬───────────┘
                         │
                         ▼
                    ┌──────────┐
                    │   End    │
                    └──────────┘
```

Fig. 3

Component
division (S10)

Component
descriptor

Vector
synthesis(S40)

Facial
descriptor

```
Input face
   image
```

First LDA
transformation

CD1

Vector
normalization

y1

First LDA
transformation

CD2

Vector
normalization

y2

First LDA
transformation

CDL

Vector
normalization

yL

S20

S30

Second LDA/GDA
transformation

z

S50

Fig. 4

```
        ╭─────────╮
        │   S50   │
        ╰────┬────╯
             │
             ▼
   ┌──────────────────────┐
   │ Determine first      │      S61
   │ similarities         │
   │ using query face     │
   │ image                │
   └──────────┬───────────┘
              │
              ▼
   ┌──────────────────────┐
   │ Extract M face       │      S62
   │ images               │
   │ depending on first   │
   │ similarities         │
   └──────────┬───────────┘
              │
              ▼
   ┌──────────────────────┐
   │ Determine second     │      S63
   │ similarities         │
   │ using M face images  │
   └──────────┬───────────┘
              │
              ▼
   ┌──────────────────────┐
   │ Extract L face       │      S64
   │ images               │
   │ depending on second  │
   │ similarities         │
   └──────────┬───────────┘
              │
              ▼
   ┌──────────────────────┐
   │ Determines final     │      S65
   │ similarity           │
   │ using M and N face   │
   │ images               │
   └──────────┬───────────┘
              │
              ▼
        ╭─────────╮
        │   S70   │
        ╰─────────╯
```

Fig. 5a

Input face image

Fig. 5b

Divided face
image

Fig.6

| Items | Experiment 1 | | Experiment 2 | | Experiment 3 | |
|---|---|---|---|---|---|---|
| | ANMRR | FIR | ANMRR | FIR | ANMRR | FIR |
| Holistic | 0.1448 | 0.0573 | 0.1267 | 0.0477 | 0.1950 | 0.0641 |
| LDA - LDA | 0.1257 | 0.0467 | 0.0898 | 0.0222 | 0.1466 | 0.0368 |
| LDA - GDA | 0.1031 | 0.0358 | 0.0677 | 0.0168 | 0.1108 | 0.0239 |

**EP 1 388 805 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020020023255

**Non-patent literature cited in the description**

- **T. K. KIM et al.** Component-based LDA Face Descriptor for Image Retrieval. *British Machine Vision Conference (BMVC,* 02 September 2002

- **BAUDAT G. et al.** Generalized Discriminant Analysis Using a Kernel Approach. *Neural Computation,* 2000